# EUROPÄISCHE PATENTANMELDUNG

(11) **EP 3 972 232 A1**
(43) Veröffentlichungstag der Anmeldung: **23.03.2022**
(21) Anmeldenummer: 20200816.5
(22) Anmeldetag: 08.10.2020
(51) Int. Cl.: H04N 1/60

(54) **VERFAHREN ZUR AUTOMATISIERTEN CHARAKTERISIERUNG EINES KONTINUIERLICHEN DIGITALDRUCKSYSTEMS**

(30) Priorität: 21.09.2020 EP 20197208
(71) Anmelder: Improve Process Analytics and Control GmbH, 9524 Villach (AT)
(72) Erfinder: Sallinger, Christian, 9500 Villach (DE); Brenner, Michael, 9500 Villach (AT); Presterl, Andreas, 9131 Grafenstein (AT)
(74) Vertreter: Cohausz & Florack

(57) **Zusammenfassung**

Die Erfindung betrifft ein Verfahren zur automatisierten Charakterisierung eines kontinuierlichen Digitaldrucksystems, a) bei dem mindestens eine Referenzchartdatei im Digitaldrucksystem gespeichert wird, b) bei dem mindestens ein Farbchart auf ein Trägermaterial im kontinuierlichen Digitaldruck-Verfahren gedruckt wird, c) bei dem das gedruckte Farbchart durch ein spektrales Messsystem gemessen und eine Farbchartdatei erzeugt wird; d) bei dem die Farbchartdatei und die Referenzchartdatei einer Differenzanalyse unterzogen werden; e) bei dem dann, wenn mittels der Differenzanalyse eine zu große Abweichung des Farbabstands von einem vorgegebenen Toleranzwert ermittelt wird, auf Basis der Referenzchartdatei und der Differenzanalyse mindestens eine Charakterisierungsdatei generiert wird und nach Anwendung der Charakterisierungsdatei zur Profilierung und/oder Linearisierung des Druckersystems die Schritte b) bis d) erneut angewendet werden; und f) bei dem dann, wenn mittels der Differenzanalyse eine Abweichung geringer als ein vorgegebener Toleranzwert ermittelt wird, der Druckvorgang mit der aktuellen Charakterisierung fortgesetzt wird..

Das Verfahren löst das technische Problem, den Prozess der Charakterisierung allgemein für das Drucken beliebiger digitaler Bilder weiter zu verbessern.

## Beschreibung

Die Erfindung betrifft ein Verfahren zur automatisierten Charakterisierung eines kontinuierlichen Digitaldrucksystems, wobei die Charakterisierung des Drucksystems verbessert werden soll. Die Erfindung betrifft auch ein Druckerzeugnis für die Durchführung des Verfahrens.

In der Druckindustrie ist eines der wesentlichen Ziele die Erzeugung möglichst gleicher Bild- und Farbeneindrücke der zu bedruckenden Materialien. Die sogenannte Farbkonstanz auch beim Druck unterschiedlicher Chargen auf unterschiedlichen Trägermaterialien soll möglichst immer gleich aussehen. Dies gilt insbesondere dann, wenn Corporate Identity gewünscht ist. Die von einer Firma gewählte Farbe bzw. die gewählten Farben sollen immer gleich aussehen, unabhängig davon, ob auf Glas, Papier, Kunststoff oder einem anderen Trägermaterial gedruckt wird. Das möglichst identische Aussehen der Druckprodukte ist gewünscht und somit ein Ziel der Druckindustrie.

Druckverfahren, Drucker, Druckfarbe und vor allem das Trägermaterial haben einen großen Einfluss darauf, wie ein Druckergebnis, das auf der Basis einer Druckdatei gedruckt worden ist, im ausgedruckten Zustand aussieht. Unter Druckfarbe wird jedes Druckmedium unter anderem wie Tinte oder Toner verstanden, mit dem Farbpigmente auf das Trägermaterial aufgebracht werden.

Dieselbe Druckdatei sieht im gedruckten Zustand auf einem glänzenden Papier anders aus als auf einem matten Papier. Ebenso beeinflusst der Unterschied von glatten Oberflächen zu rauen oder strukturierten Oberflächen das optische Ergebnis wesentlich. Während glänzende Ausdrucke über hohe Kontraste und gesättigte Farben verfügen, wirken matte doch deutlich kontrastärmer, weniger farbig und oft etwas warmtoniger. Diese Bildwirkung ist die Folge der unterschiedlichen Eigenschaften der verschiedenen Druckmaterialien und Druckverfahren. Je nach Untergrund wird das Druckergebnis Dekor oder Design genannt. Im Folgenden wird das Druckergebnis einheitlich Dekor genannt.

Gleichwohl soll eine möglichst gleiche Farbwirkung erreicht werden. Um den diversen Einflüssen durch Druckverfahren, Drucker, Druckfarbe und Trägermaterial gerecht zu werden, nutzt man die Möglichkeiten diverser Software-Tools und Programme in der Bildbearbeitung im Hinblick darauf, die Eigenschaften des Drucksystems bereits vor dem Druck durch eine geeignete Charakterisierung zu optimieren. Dieser Prozess wird insgesamt auch Farbmanagement genannt.

Oftmals lassen sich die genannten Eigenschaften des Trägermaterials, des Druckverfahrens und/oder der eingesetzten Druckfarben nicht ändern, sie müssen daher durch eine Einstellung des Druckers ausgeglichen werden. So kann auf einem cremeweißen Papier nicht per Software eine reinweiße Fläche dargestellt werden, da zur Erzeugung der weißen Flächen ein herkömmlicher Tintenstrahldrucker keine Druckfarbe auf die Fläche drucken kann. Ein helleres Weiß als den Farbton des zu bedruckenden Materials kann man nicht mit den in der Regel zur Verfügung stehenden Druckfarben (CMYK - Cyan Magenta Yellow Key(Black)) erreichen. Genauso bei der Druckfarbe Schwarz. Auch wenn mit dem Drucker maximal viel schwarze Druckfarbe auf ein Trägermaterial wie eine Leinwand gedruckt worden ist, kann dann, wenn der Ausdruck getrocknet ist, die schwarze Fläche immer nur wie ein dunkles Grau aussehen.

Wenn diese Eigenschaften nicht veränderbar sind, ist es erforderlich, das Farbmanagement für eine bestmögliche Annäherung an die zu erreichende Farbe bzw. die zu erreichenden Farben anzupassen. Dazu werden die für den Druck benötigten Charakterisierungsdateien vorab angepasst, dem Drucksystem zur Verfügung gestellt und somit die Optimierung erreicht.

Dazu ist es erforderlich, mit dem Bildbearbeitungsprogramm den Druck simulieren zu können. Dazu müssen die spezifischen Eigenschaften der Kombination aus Drucker, Druckfarbe und Druckmaterial bekannt sein, die in einem sogenannten ICC-Profil (ICC: International Color Consortium) gespeichert werden und die die Bildbearbeitungssoftware in die Lage versetzen, die Wirkung des Ausdrucks in der Softproofansicht auf einem profilierten Bildschirm zu simulieren.

Ein ICC-Profil oder auch Farbprofil ist ein genormter Datensatz, der den Farbraum eines Farbwiedergabegeräts beschreibt, z. B. eines Monitors, Druckers oder Scanners. Ziel eines konsequent eingesetzten Farbmanagements ist, dass eine Vorlage, die mit einem beliebigen Eingabegerät erfasst wurde, an anderen Ausgabegeräten möglichst ähnlich wiedergegeben wird.

Für eine Charakterisierung eines Druckers wird daher zunächst mindestens ein Farbchart mit etlichen charakteristischen Farben auf einem Trägermaterial ausgedruckt. Ein typisches Farbchart ist einerseits eine Vielzahl von beispielsweise 250 Farbflächen mit unterschiedlichen Einzelfarben in einem Raster. Andererseits können Farbverläufe der eingesetzten Einzelfarben mit Abstufungen der Auftragsmengen in 1%-Schritten als Farbchart gedruckt werden. Die Einzelfarben sind beispielsweise die üblichen Druckfarben CYMK (Cyan, Yellow, Magenta, Key (Black)).

Das Farbchart stellt somit die Ist-Werte der Farben dar, die dann mit einem Spektralfotometer gemessen und vom Rechner mit den Soll-Farbwerten eines Referenz-Farbcharts verglichen werden. Dazu werden eine Differenzanalyse durchgeführt und ein ICC-Profil in Form einer Datei erzeugt, die man auch als Farb-Identitätsdatei eines Druckers bezeichnen kann.

Wird ein Farbchart mit einer Vielzahl von Farben verwendet, dann kann das Zusammenwirken der verschiedenen Farben ausgewertet werden und eine Profilierung als eine Form der Charakterisierung vorgenommen werden.

Wird ein Farbchart mit Farbverläufen verwendet, kann eine Linearisierung des Druckers als weitere Möglichkeit einer Charakterisierung durchgeführt werden, indem die prozentualen Schritte des Farbverlaufes für jede der Druckfarben mit den gemessenen Spektraldaten übereinstimmt.

Die Charakterisierung eines Drucksystems kann somit eine Profilierung und/oder eine Linearisierung umfassen. Gegebenenfalls wird bevorzugt die Linearisierung vor der Profilierung durchgeführt.

Ein Farbmanagementsystem (CMS - Colour Management System) gewährleistet dabei die Kommunikation der Elemente der grafischen Prozesskette untereinander, indem es eine allen gemeinsame Sprache verwendet, Standard ist dabei der Farbraum L*a*b*, der in jedem ICC-Profil integriert ist. L*a*b* ist der Farbraum, der der menschlichen Sicht am nächsten kommt und der in absoluten Werten in einem Koordinatensystem die Farben definiert. Daher formt das Farbmanagement in jeder Bearbeitungsphase die im jeweiligen ICC-Profil integrierten L*a*b*-Werte aller Peripheriegeräte der Kette bis zum endgültigen Druck um. Der Farbmodus L*a*b* ist der Grundpfeiler der ICC-Architektur.

Der L*a*b*-Farbraum ist ein Farbraum, der den Bereich der wahrnehmbaren Farben abdeckt. Der L*a*b*-Farbraum wird durch ein dreidimensionales Koordinatensystem beschrieben. Die L*-Achse beschreibt die Helligkeit (Luminanz) der Farbe mit Werten von 0 (Schwarz) bis 100 (Weiß). Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die Skalen der a*-Achse und der b*-Achse umfassen einen Zahlenbereich von -128 bis +127. Es sind aber auch andere Skalierungen bekannt.

Wird die Repräsentation der Farben im L*a*b*-Raum durchgeführt, so wird bei der Differenzanalyse der Abstand zweier Farben durch den Wert von ΔE bestimmt. ΔE ist ein Maß für den Farbabstand, wobei der "Δ" hierbei als Zeichen der Differenz steht. Damit können farbige Druckergebnisse miteinander verglichen und die Abstände quantifiziert werden. Soll der Abstand zweier Farborte im L*a*b*-Farbraum bestimmt werden, so wird die Wurzel aus der Summe der Quadrate der Abstände der einzelnen Komponenten L*, a* und b* beider Farborte berechnet.

Unabhängig davon, ob der Druckprozess als unterbrochener diskontinuierlicher Einzeldruckvorgang, beispielweise ein blattweiser Druckvorgang, oder als kontinuierlicher ununterbrochener Druckprozess, beispielsweise als Dauerdruck in Form eines Rolle-zu-Rolle Druckprozess, ausgeführt wird, muss das Gesamtdrucksystem durch eine Entnahme von Proben profiliert werden.

Kontinuierliche Druckprozesse sind somit durch den Vorgang der Charakterisierung und durch die notwendige manuelle Entnahme der notwendigen Farbchart-Andrucke deutlich in ihrer Effektivität eingeschränkt, da die Profilierung nur diskontinuierlich erfolgen kann.

Aus dem Stand der Technik sind noch die folgenden Techniken bekannt.

Aus der AT 505 556 B1 ist eine Farbanalyse mit einer ortsaufgelösten multispektralen Scan-Technologie offenbart. Dazu werden Reflektanzspektren von Bildbereichen eines Bildes gemessen, in Matrizen eingetragen und mittels mathematischer Funktionen Farbverteilungsmatrizen und Spektralmatrizen bestimmt.

Die WO 2008 080185 A2 offenbart einen Ähnlichkeitsvergleich von zwei Objekten mit Bilddateien, wobei die Ähnlichkeit mit möglichst geringem mathematischen Aufwand berechnet werden kann.

Die AT 504 213 B1 betrifft ebenfalls einen Ähnlichkeitsvergleich, bei dem identische Bildbereiche bestimmt werden. Die Bildbereiche werden mit derselben Funktion analysiert und statistische Verteilungen von Intensitäten werden berechnet. Aus diesen Verteilungen wird ein Maß für die Ähnlichkeit der Bildbereiche abgeleitet.

In der EP 3 578 939 A1 wird eine Online-Qualitätskontrolle beschrieben, die mittels Bildaufnahmen im RGB-Farbraum erfolgt, wobei das Soll-Bild aus einem hyperspektralen Scan ebenfalls als RGB-Bild abgespeichert wird.

Aus dem Stand der Technik ist weiterhin ein Inline Farbmessungssystem (ICMS-Inline Colour Measurement System) der Firma ipac bekannt, das zur Farbbeurteilung mehrfärbiger Oberflächen eingesetzt wird. Das System weist einen spektralen inline angeordneten Scanner auf, der für verschiedene Materialien (Papier, Folie, Holz, Kunststoff, Keramik, Mineralstoff) und verschiedene Druckverfahren (Tiefdruck, Digitaldruck, Flexodruck, Offsetdruck, Siebdruck) eingesetzt werden kann. Das ICMS ist eine spektrale ortsaufgelöste Scantechnologie zur Messung eines Druckbildes und ist in der Lage, einen durch ein gut trainiertes und gesundes menschliches Auge wahrgenommenen optischen Farbeindruck maschinell nachzuempfinden und den Farbeindruck einer umfassenden objektiven Bewertung zu unterziehen.

Das spektrale Messsystem ist beispielsweise eine multispektrale Kamera mit 12 Bildkanälen pro aufgenommenem Bildpunkt, das pro Bildkanal eine Farbinformation erzeugt. Somit entsteht pro aufgenommenem Bildpunkt (Pixel) ein Farbspektrum aus ca. 10 bis 12 Bildkanälen. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Das spektrale Messsystem kann auch eine hyperspektrale Kamera sein, bei der pro Bildpunkt mittels einer optischen Einrichtung, beispielsweise mittels eines Prismas, das Licht spektral aufgespalten und mit einzelne spektrale Bereiche separat gemessen werden. Dadurch erhöht sich die spektrale Auflösung gegenüber einer multispektralen Kamera auf ca. 20 bis zu 250 oder mehr Bildkanälen.

Im Gegensatz zu einer herkömmlichen RGB-Kamera wird somit pro Bildpunkt nicht nur eine Farbe, sondern eine spektrale Verteilung mit erheblich mehr Informationstiefe gewonnen. Ein Vergleich von Bildinformationen aus verschiedenen spektralen Aufnahmen wird dann mittels Software durchgeführt. Die Druckdatensätze werden üblicherweise mit einer RIP - Software (Raster Image Prozessor) erstellt, beispielsweise mit den bekannten Software Produkten wie Colorgate, Ergosoft oder Caldera. Eine RIP-Software wird auch von den einzelnen Druckmaschinenhersteller den Anwendern zur Verfügung gestellt.

Daher liegt der vorliegenden Erfindung das technische Problem zugrunde, den Prozess der Charakterisierung allgemein für das Drucken beliebiger digitaler Bilder weiter zu verbessern.

Das zuvor aufgeführte technische Problem wird erfindungsgemäß durch ein Verfahren zur automatisierten Charakterisierung eines kontinuierlichen Digitaldrucksystems gelöst,
a) bei dem mindestens ein Referenz-Farbchart im Digitaldrucksystem gespeichert wird,
b) bei dem mindestens ein Farbchart auf ein Trägermaterial im kontinuierlichen Digitaldruck-Verfahren gedruckt wird,
c) bei dem das gedruckte Farbchart durch ein spektrales Messsystem gemessen und eine Farbchartdatei erzeugt wird;
d) bei dem die Farbchartdatei und die Referenzchartdatei einer Differenzanalyse unterzogen werden und der Farbabstand berechnet wird;
e) bei dem dann, wenn mittels der Differenzanalyse eine zu große Abweichung des Farbabstands von einem vorgegebenen Toleranzwert ermittelt wird, auf Basis der Referenzchartdatei und der Differenzanalyse mindestens eine Charakterisierungsdatei generiert wird und nach Anwendung der Charakterisierungsdatei zur Profilierung und/oder Linearisierung des Druckersystems die Schritte b) bis d) erneut angewendet werden; und
f) bei dem dann, wenn mittels der Differenzanalyse eine Abweichung geringer als ein vorgegebener Toleranzwert ermittelt wird, der Druckvorgang mit der aktuellen Charakterisierung fortgesetzt wird.

Das erfindungsgemäße Verfahren dient einer Inline-Charakterisierung, also Linearisierung und/oder Profilierung von kontinuierlichen Digitaldruckprozessen. Des Weiteren dient das Verfahren einem automatisierten Direktvergleich von im Digitaldruck hergestellter Farbcharts sowie dem automatisierten Korrekturvorgang bei Feststellung von Abweichungen im Direktvergleich der gemessenen Farbcharts,

Die Differenzanalyse wird vorzugsweise so durchgeführt, dass für zumindest einen Teil der Farbfelder, vorzugsweise für alle Farbfelder des Referenz-Farbcharts und des aktuell gedruckten Farbcharts der Farbabstand ΔE im L*a*b*-Farbraum ermittelt wird. Aus den einzelnen Farbabständen kann dann für jedes Farbfeld separat die Differenz bestimmt und mit einem Toleranzwert oder mit farbabhängigen separaten Toleranzwerten vergleichen werden. Bei zu großen Abweichungen vom Toleranzwert werden dann mit einer neuen Charakterisierungsdatei die entsprechenden Farbdruckeinstellungen korrigiert.

Des Weiteren kann auch die Summe der Farbabstände ausgewählter oder aller Farbflächen als Maß für die Abweichung der verglichen Farbcharts berechnet und dann mit einem vorgegebenen Toleranzwert verglichen werden. Ebenso kann ein Mittelwert, ein Medianwert oder eine andere statistische Größe aus einer Mehrzahl von Farbdifferenzen berechnet werden.

Während des Ablaufs des Verfahrens werden die Verfahrensschritte b) bis d) mindestens einmal, bei Bedarf aber so oft ohne Unterbrechung des erfindungsgemäßen Verfahrens und des Druckvorgangs wiederholt, bis der vorgegebene Toleranzwert zwischen der Referenzchartdatei und der aktuellen Farbchartdatei unterschritten wird.

Das erfindungsgemäße Verfahren optimiert daher den bekannten Prozess der Charakterisierung des Drucksystems, vorzugsweise im gesamten verfügbaren Farbraum, für das Drucken beliebiger digitaler Bilder in Form diverser Dateiformate, vom JPEG bis zum TIFF-Format, wobei der heute bekannte manuelle Arbeitsschritt der Charakterisierung von Drucksystemen durch einen automatisierten Charakterisierungsprozess ersetzt wird und damit effektiver und schneller durchführbar ist.

Die Referenz-Farbchartdatei kann grundsätzlich rein digital erzeugt und gespeichert werden. Bevorzugt wird die mindestens eine Referenzchartdatei durch Drucken mindestens eines Referenz-Farbcharts im Digitaldruck-Verfahren und durch Vermessen mit einem spektralen Messsystem erzeugt und anschließend im Digitaldrucksystem gespeichert. Sowohl das Referenz-Farbchart als auch die nachfolgend gedruckten Farbcharts werden dabei weiter bevorzugt auf demselben oder gleichen Trägermaterial gedruckt. Jedoch können auch unterschiedliche Trägermaterialien eingesetzt werden.

Das Einscannen der für die Charakterisierung benötigten Farbcharts erfolgt unmittelbar inline in der Produktionslinie, also während des Druckprozesses. Der Druck der Farbcharts und das Scannen der Farbcharts mittels des Messsystems erfolgen in einem nicht unterbrochenen Prozess direkt nacheinander. Die so erzeugten Scandaten stehen sofort und unmittelbar der Bildauswertungssoftware zur Differenzanalyse zur Verfügung.

Das erfindungsgemäße Verfahren kann daher ohne das Eingreifen und das bislang notwendige Know How einer Person durchgeführt werden und liefert genaue und stetig gleiche Ergebnisse. Dadurch wird Zeit eingespart, weil die Farbcharts nicht mehr händisch bearbeitet bzw. ausgewertet werden müssen. Weder Zuschneiden noch manuelles Einscannen sind mehr notwendig und entfallen als manuelle Einzelschritte.

Das mindestens eine Referenz-Farbchart wird vor der Durchführung des Verfahrens als Soll-Druckvorlage als Referenzchartdatei n der Differenzanalysesoftware hinterlegt. In bevorzugter Weise wird das mindestens eine Referenz-Farbchart ebenfalls inline im kontinuierlichen Digitaldruck-Verfahren gedruckt, also auf derselben Anlage wie die nachfolgende Produktion. Alternativ kann das Referenz-Farbchart auch in einem separaten Schritt unabhängig von der Anlage für den kontinuierlichen Digitaldruck hergestellt werden. Das Messsystem zur Erstellung der Referenzchartdatei ist dann aber bevorzugt vom gleichen Typ oder der gleichen Baureihe, insbesondere wird ein identisches Messsystem verwendet.

Die Referenzchartdatei wird somit ebenfalls unter Verwendung der gleichen Scan-Technologie und insbesondere mit demselben Scanner erstellt. Damit ist sichergestellt, dass sowohl die Soll-Daten als auch die Ist-Daten unter gleichen Bedingungen generiert wurden und die Vergleichbarkeit gegeben ist.

Die oben genannten Farbcharts mit Farbverlauf oder mit einer Vielzahl von verschiedenen Farben werden bevorzugt so gewählt, dass ein möglichst großer Farbraum abgebildet wird. Das ermöglicht eine Charakterisierung des Drucksystems innerhalb des gesamten mit dem Drucksystem verfügbaren Farbraums.

Weiterhin werden bevorzugt in Form und Ausführung gleich gestaltete Farbcharts miteinander verglichen. Somit kann die Differenzanalysesoftware die beiden Datensätze direkt miteinander vergleichen. Mögliche farbliche Abweichungen innerhalb der spektralen Datensätze werden im direkten Vergleich zueinander als Unterschiede detektiert und umgehend durch eine Differenzanalysesoftware automatisiert korrigiert. Der Bezug ist die als Referenz hinterlegte Referenz-Farbchartdatei als Soll-Datei.

Eine Charakterisierungsdatei wird dann generiert und auf den Drucker übertragen oder bei nachfolgenden Druckaufträgen zusammen mit den eigentlichen Druckdateien in Kombination übertragen. Die Charakterisierungsdateien werden als Druckdatensätze üblicherweise mit einer Differenzanalysesoftware als Teil einer sogenannten RIP-Software (RIP - Raster Image Prozessor) erstellt, beispielsweise mit einer Software von Colorgate, Ergosoft oder Caldera.

Das beschriebene Verfahren kann mit einem beliebigen Drucker, insbesondere mit einem Zeilendrucker durchgeführt werden, wobei der Drucker die gesamte Breite des Trägermaterials während der Bewegung bedruckt. Alternativ dazu kann auch ein Drucker zum Einsatz kommen, bei dem der Druckkopf quer zur Transportrichtung hin- und herbewegt wird. Zudem können Single-Pass-Drucker und Multipass-Drucker zum Einsatz kommen.

Für das erfindungsgemäße Verfahren wird eine geeignete, bevorzugt die oben beschriebene Scan-Technologie als Messsystem eingesetzt, die bevorzugt auch für kontinuierliche Druckprozesse auch bei höheren Vorschubgeschwindigkeiten geeignet ist. Die zu erzeugenden Scandaten sollen bevorzugt hohe Auflösungen von beispielsweise 90 dpi oder mehr ermöglichen. Die die IPAC-ICMS Scantechnologie ist eine bekannte und geeignete Scan-Technologie, die oben beschrieben worden ist und die eine multispektrale oder hyperspektrale Scantechnologie zur Messung darstellt.

Das Messsystem kann somit auch ortsaufgelöst betrieben werden, um eine Mehrzahl von Messergebnissen pro Farbfeld des zu vermessenen Farbcharts zu erhalten. Typischer Weise sind die einzelnen Farbfelder 1 cm² groß. Aufgrund der hohen Auflösung des Messsystems sind dagegen auch viel kleinere Felder möglich.

Daher wird das oben aufgezeigte technische Problem auch durch ein Druckerzeugnis dadurch gelöst, dass ein Trägermaterial und mit mindestens ein auf dem Trägermaterial gedrucktes Farbchart vorgesehen sind, wobei mindestens ein Farbchart Farbflächen mit einer Größe von weniger als 5 mm² und insbesondere weniger als oder gleich 1 mm² aufweist.

Somit sind kleiner Farbflächen für den Aufbau der Farbcharts möglich und die Farbcharts nehmen eine geringere Gesamtfläche ein oder können eine größere Anzahl an Farbflächen bei gleicher Gesamtgröße aufweisen.

Wenn die Farbcharts in einer ausreichend kleinen Größe gedruckt werden, können diese noch einfacher in einen kontinuierlichen Druckprozess integriert werden. Beispielsweise können kleine Farbcharts oder Teile von kleinen Farbcharts als Teil eines Dekorabschnitts gedruckt und ausgewertet werden.

Die Ausgestaltung der Farbcharts kann neben der beschriebenen Rasteranordnung der einzelnen Farbflächen auch andere Anordnungen aufweisen und ist insoweit frei wählbar. Alternativ kann bei einer Erstellung des Farbcharts eine Reihe von Farbflächen sequentiell entlang des Rands des zu bedruckenden Trägermaterials gedruckt werden. Die Sequenz der einzelnen Farbflächen gibt in einer Reihe die Farbflächen der oben genannten Varianten der Farbcharts wieder, die sequentiell vom Messsystem gemessen und anschließend ausgewertet werden. Somit kann nicht nur vor dem Druckvorgang des zu druckenden Bildes oder Dekors, sondern auch kontinuierlich während des Druckens, eine Überprüfung des Drucksystems und gegebenenfalls eine Änderung der Einstellung des Druckers mittels neuer Charakterisierungsdateien durchgeführt werden.

Werden die einzelnen Farbflächen am Rand des Trägermaterials neben dem eigentlichen Dekor gedruckt, dann können diese auch mit der ICMS-Scantechnologie vermessen werden. Dann nimmt der Scanner sowohl die randständigen Farbflächen als auch das Dekor auf. Somit kann dann sowohl die Farbtreue des Dekordruckes als auch die Einhaltung der Charakterisierung des Druckers kontinuierlich gemessen und überwacht und ggf. nachgesteuert werden.

Werden darüber hinaus die Farbflächen so klein gedruckt, so dass sie noch vom spektralen Messsystem örtlich aufgelöst werden können, aber nur wenig Platz einnehmen, können am Rand des Trägermaterials auch zwei oder mehr Reihen von Farbflächen nebeneinander gedruckt werden. Dadurch wird die Wiederholungsrate der Farbchart-Informationen erhöht und das Inline-Verfahren weiter verbessert.

Eine weitere Anwendung der kleinen Farbfelder besteht darin, dass gesamte Farbcharts mit einer Vielzahl von Farbfeldern in der Größe einer Briefmarke, also im Bereich von 1 cm² gedruckt werden können. Das kann beispielsweise beim Drucken von schmalen Trägermaterialien, beispielsweise von Kantenbändern für Möbelteile, vorteilhaft eingesetzt werden.

Als Messsystem kommt alternativ zur ICMS-Scantechnologie auch eine Anordnung von Einzelspektrometern in geeigneter Inline-Anordnung in Frage, die kontinuierlich Farbflächen von Farbcharts vermessen und die Ergebnisse der Auswertesoftware zur Verfügung stellen. Eine solche Anordnung von Einzelspektrometern oder sogar nur ein einzelnes Spektrometer kann beispielsweise als Messsystem genutzt werden, um die erwähnten randständigen Farbflächen zu vermessen.

In weiter bevorzugter Weise werden mindestens zwei oder mehrere unterschiedliche Farbcharts angewendet, um die Genauigkeit des Verfahrens zu verbessern.

Bei einer weiteren vorteilhaften Ausbildung des beschriebenen Verfahrens wird das Drucken des mindestens einen Farbcharts und das Messen mit der spektralen Scantechnologie kontinuierlich mit einer Wiederholungsfrequenz von mindestens einem Scan pro Minute, bevorzugt mindestens einem Scan pro 30 Sekunden oder besonders bevorzugt, mindestens einem Scan pro 10 Sekunden durchgeführt. Somit bedeutet kontinuierlich im Sinne des beschriebenen Verfahrens eine Scanhäufigkeit der Wiederholungsaufnahmen in einem Zeitraum ohne sonstige Unterbrechung in den beschriebenen Geschwindigkeiten.

Weiterhin kann bei dem Verfahren eine Auflösung des Scanners von mindestens 32 dpi, bevorzugt von mindestens 72 dpi, besonders bevorzugt von mindestens 90 dpi verwendet wird. Somit werden ausreichend hohe Auflösungen erreicht, um die verschiedenen Farbfelder der Farbcharts voneinander zu trennen.

Weiterhin können mit dem beschriebenen Verfahren Bahngeschwindigkeiten des Trägermaterials von mindestens 1 Meter pro Minute bis zu 300 Meter pro Minute oder mehr verwendet werden. Die hohen Geschwindigkeiten stellen im Gegensatz zu den bisherigen manuellen Profilierungen eine große Verbesserung dar.

Das Verfahren kann mit einer Reihe von unterschiedlichen Druckfarben, beispielsweise Solvent Tinten, Latex Tinten, UV-Tinten, wässrig pigmentierten Tinten und auf unterschiedlichen Trägermaterialien wie Papier, Pappe, Kunststoffen, Holzwerkstoffen, Textilien, Metall, Glas, Keramik oder Kork durchgeführt werden.

Eine weitere bevorzugte Ausgestaltung und Ergänzung des beschriebenen Verfahrens besteht darin, dass das gedruckte Dekor selbst zur Charakterisierung des Drucksystems verwendet wird und im laufenden Druckprozess eine Steuerung der Chrarakterisierung erfolgen kann.

Dazu kann die ICMS-Scantechnologie dafür eingesetzt werden, in einer Produktionslinie eine musterbasierte Profilierung durchzuführen, bei der keine Farbcharts gedruckt und ausgewertet werden, sondern aus den Farben des aufgedruckten Dekors ein eingeschränkter Farbraum gebildet wird, der mit einem bekannten Referenzfarbraum gleicher Farben verglichen wird. Die musterbasierte Profilierung ist daher ein Spezialfall und nur für eine Charakterisierung des Drucksystems in dem beschränkten Farbraum einsetzbar.

Bei der musterbasierten Profilierung bzw. Farbindizierung wird ein Ausschnitt (ROI - Region of Interest) des gedruckten Bildes bzw. Dekors vermessen. Der Ausschnitt ist bevorzugt repräsentativ für das Bild ausgewählt, so dass vorzugsweise alle dekorbestimmenden Farben in diesem Ausschnitt vorkommen. Aus der Messung des Ausschnittes wird dann auf ähnliche Weise wie mit einem Farbchart eine Charakterisierung des Druckers durchgeführt und eine Charakterisierungsdatei erstellt. Dazu werden bevorzugt Pixel mit ähnlicher Farbe zusammengefasst und dann wie ein zusammenhängendes Farbfeld behandelt. Mit dieser Information kann dann die neue Charakterisierungsdatei erstellt werden.

In vorteilhafter Weise wird somit kein Ausschuss produziert, da die gemessene Fläche zum gedruckten Bild bzw. Dekor gehört. Des Weiteren kommen die Farben, die zur Profilierung benutzt werden, im gedruckten Bild bzw. Dekor vor. Damit erhält man eine detailreichere Charakterisierung des Farbraumes, der für das Bild bzw. Dekor ausschlaggebend ist.

Mithilfe der musterbasierten Farbindizierung kann zusätzlich zur Charakterisierung des gesamten Farbraums durch den Einsatz der Farbcharts eine Closed-Loop Color Correction realisiert werden. Dazu greifen die folgenden Komponenten automatisiert ineinander: Drucksteuerung, Messtechnik, Farbindizierung und Farbmanagement.

Erst dadurch, dass ein Ausschnitt des Bildes bzw. Dekors inline vermessen wird, kommt es zu keiner Unterbrechung im Regelkreis. Der Druck kann durchgehend kontrolliert werden, und bei bemerkenswerten Veränderungen zum Referenzbild wird über die Charakterisierungsdatei als Farbindex das Farbmanagement angesteuert. Das Farbmanagement korrigiert durch eine Veränderung des Drucksystems den Ausdruck.

Im Folgenden wird die Erfindung anhand von Ausführungsbeispielen mit Bezug auf die Zeichnung erläutert. In der Zeichnung zeigen
- Fig. 1: ein Flussdiagramm, das ein erfindungsgemäßes Verfahren beschreibt,
- Fig. 2: eine erste Anlage zur Durchführung eines erfindungsgemäßen Verfahrens,
- Fig. 3: eine zweite Anlage zur Durchführung eines erfindungsgemäßen Verfahrens,

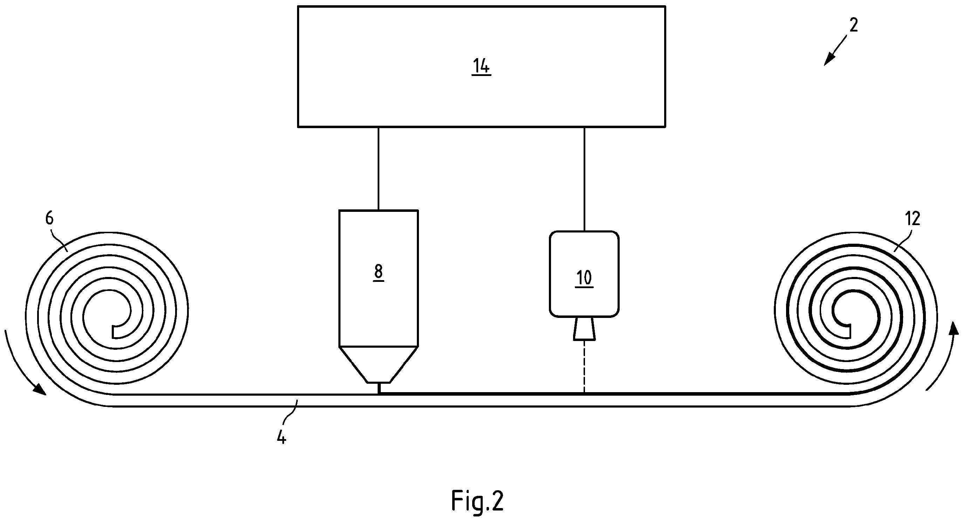

- Fig. 2: eine dritte Anlage zur Durchführung eines erfindungsgemäßen Verfahrens,

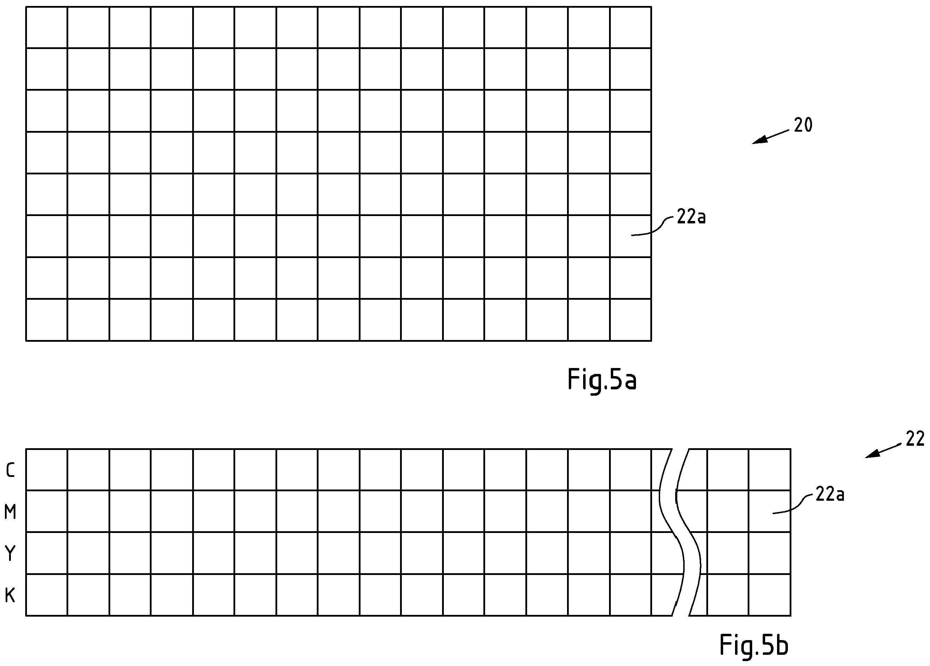

- Fig. 5a, b: zwei Beispiele für verschiedene Farbcharts für die Durchführung des erfindungsgemäßen Verfahrens,

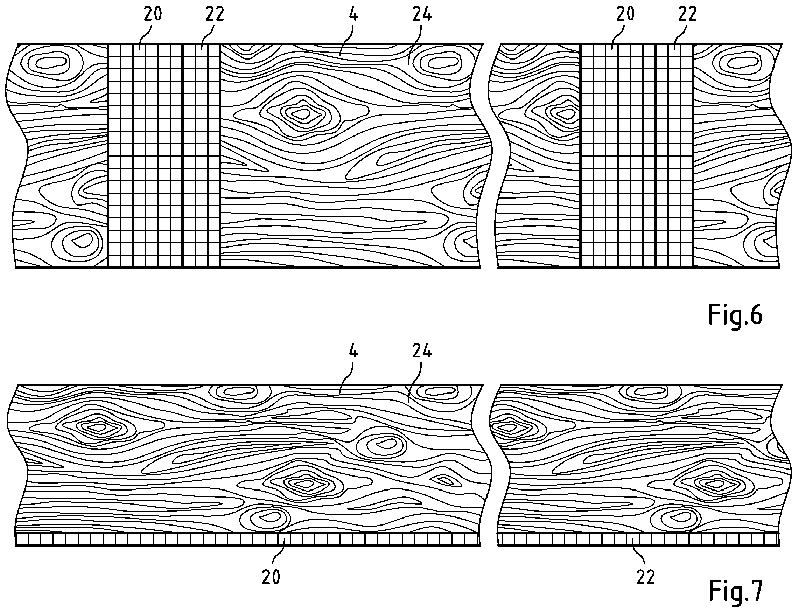

- Fig. 6: ein breites, langgestrecktes bedrucktes Trägermaterial
- Fig. 7: ein schmales, langgestrecktes bedrucktes Trägermaterial mit einem am Rand gedruckten einreihigen Farbchart und

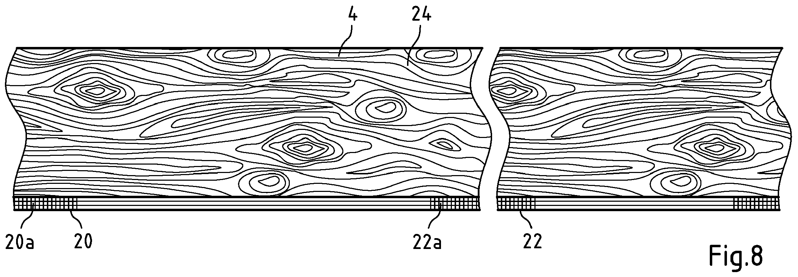

- Fig. 8: ein bedrucktes Trägermaterial gemäß Fig. 5 mit einem am Rand gedruckten dreireihigen Farbchart.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

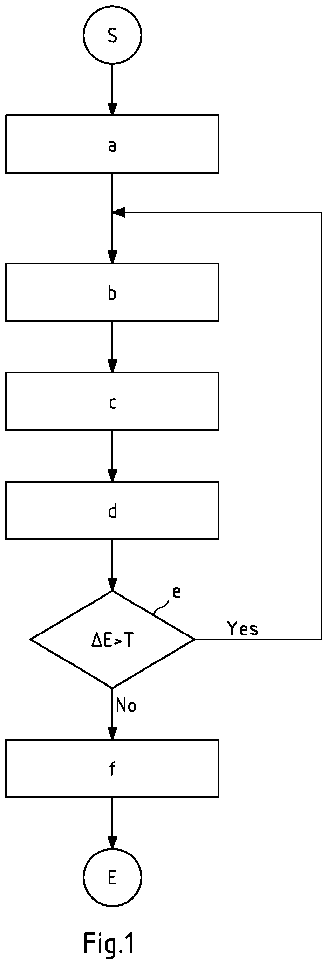

Fig. 1 zeigt ein erfindungsgemäßes Verfahren zur automatisierten Charakterisierung eines kontinuierlichen Digitaldrucksystems anhand eines Flussdiagramms.

Nach dem Start S des Verfahrens wird zunächst in Schritt a mindestens eine Referenzchartdatei im Digitaldrucksystem gespeichert. Die mindestens eine Referenzchartdatei wird im nachfolgenden Verfahren als Referenz verwendet, um die Einstellungen des Drucksystems zu charakterisieren. Die mindestens eine Referenzchartdatei wird dabei mit Hilfe eines Speichers in einer Steuer- und Regeleinrichtung des Drucksystems abgelegt. Der Speicherort kann dabei in dem eigentlichen Drucker und/oder in einem separaten Steuer- und Regelgerät abgelegt sein.

Die Referenzchartdatei bzw. die Referenzchartdateien können auf verschiedene Art und Weise erstellt worden sein. Eine Referenzchartdatei kann rein elektronisch durch Anwendung von mindestens einem Bildbearbeitungsprogramm erstellt worden sein. Die mindestens eine Referenzchartdatei kann aber auch durch Drucken mindestens eines Referenz-Farbcharts im Digitaldruck-Verfahren und durch Vermessen mit einem spektralen Messsystem und durch Auswerten der gemessenen Farbspektren erzeugt werden.

Im nächsten Schritt b erfolgt dann das Drucken von mindestens einem Farbchart auf ein Trägermaterial, wobei ein kontinuierliches Digitaldruck-Verfahren eingesetzt wird. Unter einem kontinuierlichen Druckverfahren wird dabei ein Druckverfahren verstanden, bei dem ein ununterbrochener Druck auf einem Trägermaterial über eine große Längserstreckung durchgeführt wird. Beispiele dafür sind das kontinuierliche Bedrucken von Plattenmaterial aus der Möbel- und Fußbodenherstellung, wobei das Plattenmaterial anschließend aufgeteilt wird. Ein kontinuierliches Druckverfahren wird auch bei der Herstellung von Kantenbändern für Möbelplatten oder bei Dekorpapieren für Möbelplatten oder Fußbodenpaneelen angewendet. Außerhalb der Möbelindustrie werden kontinuierliche Druckverfahren beispielsweise auch in der Printmedienherstellung oder der Bekleidungsherstellung angewendet.

Dem stehen diskontinuierliche Druckprozesse mit einem Bedrucken einzelner Trägermaterialien, beispielsweise von einzelnen Blätter Papier, gegenüber.

Im Schritt c wird das auf das Trägermaterial gedruckte Farbchart durch ein spektrales Messsystem gemessen und eine Farbchartdatei erzeugt. Unter einem spektralen Messsystem werden solche Messsysteme verstanden, mit denen pro aufgenommenem Bildpunkt (Pixel), beispielsweise eines CMOS-Sensors, eine spektrale Analyse durchgeführt wird und somit ein Spektrum pro Bildpunkt (Pixel) aufgenommen wird. Das Spektrum ist in sogenannte Bildkanäle aufgeteilt und die Anzahl der Bildkanäle liegt zwischen 10 und Werten von über 200.

Die spektrale Analyse wird dabei zum Beispiel mit wechselnden Filtern oder fest installierten Farbfiltern pro sensitivem Messpunkt eines Bildsensors durchgeführt. Ein solches Messsystem wird auch multispektrales Messsystem genannt. Des Weiteren kann das vom Bildpunkt stammendes Licht spektral durch ein optisches Element, beispielsweise ein Prisma, zerlegt und von einer Reihe von Messpunkten (Pixeln) aufgenommen werden. Ein solches Messsystem wird auch als hyperspektrales Messsystem genannt und weist in Regel mehr Bildkanäle pro Messpunkt als multispektrale Messsysteme auf.

Im Schritt d werden dann die zuvor erzeugte Farbchartdatei und die Referenzchartdatei einer Differenzanalyse unterzogen. Dazu wird pro Messpunkt die spektrale Verteilung in einen Farbwert bzw. Farbpunkt im L*a*b*-Farbraum umgerechnet und die korrespondierenden Farbpunkte der Referenzchartdatei und der Farbchartdatei miteinander verglichen. Dafür wird wiederum der Abstand ΔE der beiden Farbpunkte als Wurzel aus der Summe der Quadrate der Abstände der einzelnen Komponenten L*, a* und b* beider Farborte berechnet.

Im Schritt e wird dann, wenn mittels der Differenzanalyse eine zu große Abweichung des Farbabstands ΔE von einem vorgegebenen Toleranzwert T ermittelt wird, auf Basis der Referenzchartdatei und der Differenzanalyse mindestens eine Charakterisierungsdatei generiert und nach Anwendung der Charakterisierungsdatei zur Profilierung und/oder Linearisierung des Druckersystems die Schritte b bis d erneut angewendet.

Die Bestimmung der Abweichung des Farbabstands erfolgt dabei bevorzugt pro Messpunkt mit einer Differenzbildung des Wertes von ΔE mit einem Toleranzwert T, so dass gegebenenfalls pro Messpunkt eine Änderung in der Charakterisierungsdatei hinterlegt werden kann.

Die Bestimmung der Abweichung des Farbabstands kann auch für eine vorbestimmte Anzahl von Messpunkten mit einer Differenzbildung der Summe oder des Mittelwertes der Werte ΔE mit einem Toleranzwert T erfolgen. Somit kann gegebenenfalls auch für mehrere Messpunkte einer Farbfläche oder für Farbbereiche mit Farbfeldern mit unterschiedlichen Farbnuancen und nicht nur für einzelne Farbwerte eine Änderung der Charakterisierungsdatei hinterlegt werden.

Die Schritte b bis d werden dann solange wiederholt, bis eine vorgegebene Anzahl von Farbabständen ΔE, Summen oder Mittelwerten von ΔE oder alle Farbabstände ΔE den Toleranzwert erfüllen.

Wenn die Bedingung in Schritt e nicht erfüllt ist, wenn also mittels der Differenzanalyse eine Abweichung geringer als ein vorgegebener Toleranzwert ermittelt wird, dann wird im Schritt f der Druckvorgang mit der aktuellen Charakterisierung fortgesetzt. Dadurch wird ein möglichst gutes und mit dem Referenzbild übereinstimmendes Druckbild erreicht.

Das Verfahren endet dann bei E, bevor es durch einen vorgegebenen oder von den Druckergebnissen oder anderen Umständen abhängigen Anlass erneut durchgeführt wird.

Fig. 2 zeigt eine erste Anlage 2 zur Durchführung des Verfahrens zur automatisierten Charakterisierung eines kontinuierlichen Digitaldrucksystems. Zunächst wird das Trägermaterial 4 von einer ersten Rolle 6 abgerollt, unterhalb des Digitaldruckers 8 und des spektralen Messsystems 10 geführt und dann wieder auf einer Rolle 12 aufgerollt. Insoweit kann man von einem endlosen Trägermaterial 4 sprechen, mit dem das kontinuierliche Drucken und Charakterisieren durchgeführt wird. Dabei ist selbstverständlich, dass das endlose Band eine endliche, aber große Länge aufweist.

Die Ergebnisse der spektralen Messungen durch das spektrale Messsystem werden einer Steuer- und Charakterisierungseinrichtung 14 übertragen, die wiederum nicht nur die Druckdateien oder andere Steuerungsdateien, sondern auch die Charakterisierungsdateien auf den Digitaldrucker 8 überträgt.

Wie oben erläutert wurde, kann die Referenzchartdatei digital oder durch Drucken und Vermessen mindestens eines gedruckten Referenz-Farbcharts erstellt werden. Dabei wird in dem dargestellten Beispiel das Referenz-Farbchart im Digitaldruck-Verfahren inline auf das Trägermaterial gedruckt. Somit finden sowohl das Erstellen des Referenz-Farbcharts als auch das nachfolgende Drucken und Vermessen der Farbcharts in einem inline-Prozess kontinuierlich statt.

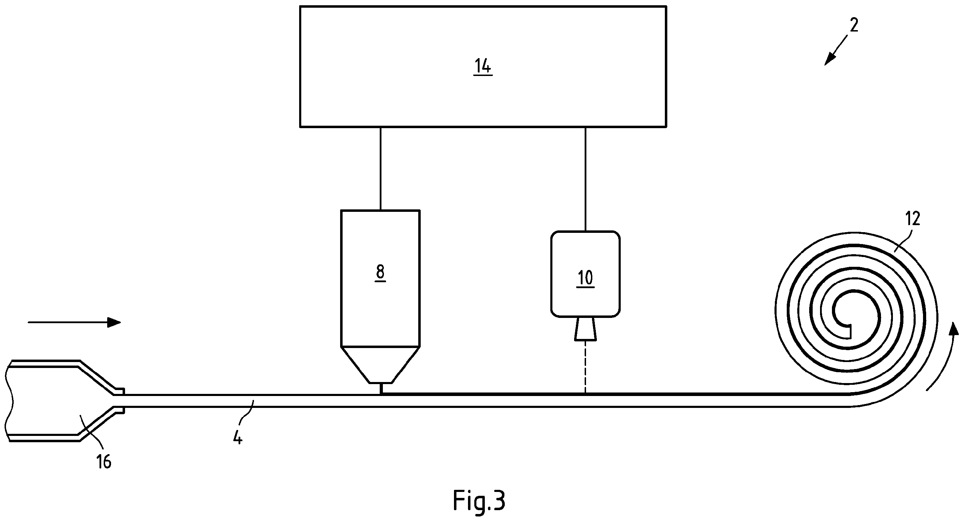

Fig. 3 zeigt eine zweite Anlage 2 zur Durchführung des Verfahrens zur automatisierten Charakterisierung eines kontinuierlichen Digitaldrucksystems. Im Vergleich zur Anlage nach Fig. 2 wird das Trägermaterial 4 nicht von einer Rolle abgewickelt, sondern durch eine Extrusionsprozess hergestellt. Dazu ist schematisch ein Extrusionswerkzeug 16 dargestellt, aus dem ein Strang zur Herstellung beispielsweise eines Kantenmaterials für die Anwendung bei Möbelplatten extrudiert wird. Grundsätzlich notwendige Kalander und Abkühlstationen sind hier der Einfachheit wegen nicht dargestellt. Anstelle des Extrusionswerkzeugs 16 kann auch eine Stranggussvorrichtung eingesetzt werden, um einen kontinuierlichen Strang an Trägermaterial zu erzeugen.

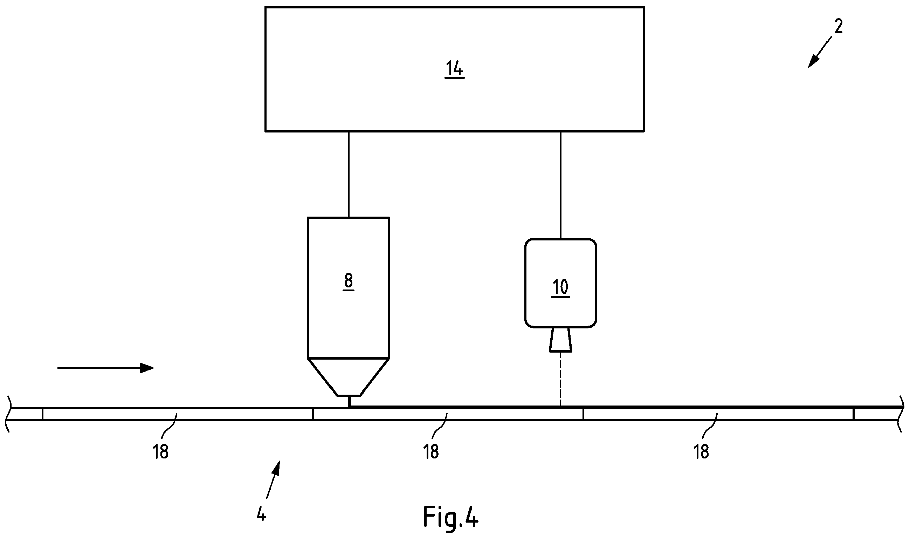

Fig. 4 zeigt eine dritte Anlage 2 zur Durchführung des Verfahrens zur automatisierten Charakterisierung eines kontinuierlichen Digitaldrucksystems. Im Vergleich zu den Anlagen nach den Fig. 2 und 3 ist das Trägermaterial 4 nicht als endloses Material ausgebildet, sondern besteht aus einer Vielzahl von aneinander anstoßenden Elementen 18, beispielsweise Platten oder Blättern. Das Trägermaterial 4 besteht also aus einzelnen Elementen 18, die vor und nach dem Bedrucken separat vorliegen. Das kontinuierliche Drucken und Messen von Farbcharts erfolgt dann auf dem aus einzelnen Elementen 18 zusammengesetzten Trägermaterial 4.

Die Fig. 5a zeigt einen typischen Farbchart 20, der flächig in einem zweidimensionalen Raster auf das Trägermaterial 4 gedruckt worden ist. Die einzelnen Farbfelder 20a des Farbcharts 20 weisen unterschiedliche Farben auf und die Vielzahl von Farbfeldern spannt einen möglichst großen Teil des Farbraums des Drucksystems auf. In der Fig. 5a sind die Farbfelder sämtlich in weiß dargestellt, um vor allem deren Anordnung zu zeigen. Eine angenäherte Darstellung verschiedener Farben in Graustufen innerhalb der Farbfelder wird aus Gründen der Übersichtlichkeit weggelassen.

Der Farbchart 20 ist insbesondere für die Durchführung einer Profilierung geeignet, bei der das Zusammenwirken der einzelnen Farben eines anwendbaren Farbraums charakterisiert wird.

Fig. 5b zeigt einen weiteren typischen Farbchart 22, bei dem in vier Reihen von Farbfeldern 22a die vier Farben C (Cyan), M (Magenta), Y (Yellow) und K (Key, Schwarz) in Helligkeitsabstufungen von 100 % bis 0 % gedruckt sind. Die Farbverläufe dienen vor allem einer Linearisierung des Digitaldruckers, um Helligkeitsstufen charakterisieren zu können.

Fig. 6 zeigt in einer Draufsicht ein endloses und breites Trägermaterial 4, beispielsweise ein Plattenmaterial für Möbelteile oder Fußbodenpaneele, auf das die Farbcharts 20 und 22 und anschließend ein Dekor 24, hier angedeutet als Holzdekor, gedruckt wird. Die im kontinuierlichen Verfahren zwischen jeweils zwei Abschnitten mit Dekor 24 gedruckten Farbcharts 20 und 22 dienen einer regelmäßig wiederkehrenden Charakterisierung des Drucksystems. Bei dieser Anwendung ist es möglich, dass die wiederkehrenden Farbcharts 20 und/oder 22 jeweils nur zu einem Teil gedruckt werden.

Beispielsweise kann das Drucken des mindestens einen Farbcharts und das Messen mit dem spektralen Messsystem kontinuierlich mit einer Wiederholungsfrequenz von mindestens einem Scan pro Minute, bevorzugt mindestens einem Scan pro 30 Sekunden oder besonders bevorzugt, mindestens einem Scan pro 10 Sekunden durchgeführt werden.

Fig. 7 zeigt ebenfalls in Draufsicht ein endloses, aber schmales Trägermaterial 4, beispielsweise ein Kantenmaterial für auf Möbelteile aufzubringende Seitenkanten, auf das die Farbcharts 20 und 22 als eine lineare Sequenz und parallel dazu ein Dekor 24, hier ebenfalls angedeutet als Holzdekor, gedruckt werden. Der Kantenbereich des Trägermaterials 4, das in der nachfolgenden Bearbeitung abgetrennt wird, wird somit für die Charakterisierung des Drucksystems verwendet, ohne dass ein unnötiger Abfall produziert wird. Das Drucken und das Vermessen der Farbcharts können hierbei kontinuierlich ohne Unterbrechung oder mit Unterbrechungen erfolgen.

Fig. 8 zeigt ein erfindungsgemäßes Druckerzeugnis, das insbesondere für die Durchführung eines zuvor beschriebenen Verfahrens geeignet ist. Ein Trägermaterial 4 ist vorgesehen und mit mindestens ein Farbchart 20 und/oder 22 ist auf dem Trägermaterial 4 gedruckt worden. Erfindungsgemäß ist diese Ausführungsform so ausgestaltet, dass mindestens ein Farbchart 20, 22 Farbflächen 20a, 22a mit einer Größe von weniger als 5 mm² und insbesondere weniger als oder gleich 1 mm², aufweist. Somit kann im Vergleich zum Stand der Technik, bei dem die Farbflächen eine Größenordnung von ca. 1 cm² aufweisen, eine viel geringere Fläche des Trägermaterials 4 für das Aufdrucken und Vermessen der Farbcharts genutzt werden. Derart kleine Farbflächen werden durch die oben beschriebenen spektralen, insbesondere multispektralen oder hyperspektralen Messsysteme möglich.

Dabei zeigt Fig. 8 ein ebenfalls erfindungsgemäßes Druckerzeugnis, das vorliegend das bedruckte Trägermaterial 4 eines Kantenbandes mit einem Dekor 24, erneut in Form eines Holzdekors, ist. Das Trägermaterial 4 des Kantenbands selbst weist also nur eine begrenzte Breite auf und die Farbfelder 20a, 22a der Farbcharts 20, 22 sind am Rand des Trägermaterials 4 gedruckt. Dabei sind drei nebeneinander angeordnete Reihen von Farbfeldern 20a, 22a gedruckt.

## Patentansprüche

1. Verfahren zur automatisierten Charakterisierung eines kontinuierlichen Digitaldrucksystems,
a) bei dem mindestens eine Referenzchartdatei im Digitaldrucksystem gespeichert wird,
b) bei dem mindestens ein Farbchart auf ein Trägermaterial im kontinuierlichen Digitaldruck-Verfahren gedruckt wird,
c) bei dem das gedruckte Farbchart durch ein spektrales Messsystem gemessen und eine Farbchartdatei erzeugt wird,
d) bei dem die Farbchartdatei und die Referenzchartdatei einer Differenzanalyse unterzogen werden,
e) bei dem dann, wenn mittels der Differenzanalyse eine zu große Abweichung des Farbabstands von einem vorgegebenen Toleranzwert ermittelt wird, auf Basis der Referenzchartdatei und der Differenzanalyse mindestens eine Charakterisierungsdatei generiert wird und nach Anwendung der Charakterisierungsdatei zur Profilierung und/oder Linearisierung des Druckersystems die Schritte b) bis d) erneut angewendet werden, und
f) bei dem dann, wenn mittels der Differenzanalyse eine Abweichung geringer als ein vorgegebener Toleranzwert ermittelt wird, der Druckvorgang mit der aktuellen Charakterisierung fortgesetzt wird.

2. Verfahren nach Anspruch 1,
bei dem die mindestens eine Referenzchartdatei durch Drucken mindestens eines Referenz-Farbcharts im Digitaldruck-Verfahren und durch Vermessen mit einem spektralen Messsystem erzeugt wird.

3. Verfahren nach Anspruch 1 oder 2,
bei dem mindestens zwei oder mehrere unterschiedliche Farbcharts angewendet werden.

4. Verfahren nach einem der Ansprüche 1 bis 3,
bei dem die Farbcharts flächig in einem zweidimensionalen Raster auf das Trägermaterial gedruckt werden.

5. Verfahren nach einem der Ansprüche 1 bis 4,
bei dem die Farbcharts als lineare Sequenzen von Farbfeldern, vorzugsweise am Rand des Trägermaterials gedruckt werden.

6. Verfahren nach einem der Ansprüche 1 bis 5,
bei dem der digital gedruckte Farbchart mit dem multispektralen Messsystem oder mit einem hyperspektralen Messsystem gemessen wird.

7. Verfahren nach einem der Ansprüche 1 bis 6,
bei dem das Drucken des mindestens einen Farbcharts und das Messen mit dem spektralen Messsystem kontinuierlich mit einer Wiederholungsfrequenz von mindestens einem Scan pro Minute, bevorzugt mindestens einem Scan pro 30 Sekunden oder besonders bevorzugt, mindestens einem Scan pro 10 Sekunden durchgeführt wird.

8. Verfahren nach einem der Ansprüche 1 bis 7,
bei dem eine Auflösung des Scanners des Messsystems von mindestens 32 dpi, bevorzugt von mindestens 72 dpi, besonders bevorzugt von mindestens 90 dpi verwendet wird.

9. Verfahren nach einem der Ansprüche 1 bis 8,
bei dem Bahngeschwindigkeiten des Trägermaterials von mindestens 1 Meter pro Minute bis zu 300 Meter pro Minute verwendet werden.

10. Verfahren nach einem der Ansprüche 1 bis 9,
bei dem Solvent Tinten, Latex Tinten, UV-Tinten, wässrig pigmentierten Tinten eingesetzt werden.

11. Verfahren nach einem der Ansprüche 1 bis 10,
bei dem auf Papier, Pappe, Kunststoffen, Holzwerkstoffen, Textilien, Metall, Glas, Keramik oder Kork gedruckt wird.

12. Druckerzeugnis, insbesondere für die Durchführung eines Verfahrens nach einem der Ansprüche 1 bis 12,
- mit einem Trägermaterial und
- mit mindestens einem auf dem Trägermaterial gedruckten Farbchart,
- wobei mindestens ein Farbchart Farbflächen mit einer Größe von weniger als 5 mm² und insbesondere weniger als oder gleich 1 mm² aufweist.

13. Druckerzeugnis nach Anspruch 12,
**dadurch gekennzeichnet,**
**dass** die Farbfelder mindestens eines Farbcharts am Rand des Trägermaterials gedruckt sind.

14. Druckerzeugnis nach Anspruch 13,
**dadurch gekennzeichnet,**
**dass** mindestens zwei, vorzugsweise nebeneinander angeordnete, Reihen von Farbfeldern gedruckt sind.
